Europäisches Patentamt

European Patent Office

Office européen des brevets

(19)

(11) Publication number: **0 135 372**
**A2**

# (12) EUROPEAN PATENT APPLICATION

(21) Application number: **84305633.4**

(22) Date of filing: **17.08.84**

(51) Int. Cl.⁴: **A 61 J 3/07**

(30) Priority: **16.09.83 US 553194**

(43) Date of publication of application:
**27.03.85 Bulletin 85/13**

(84) Designated Contracting States:
**CH DE FR GB IT LI**

(71) Applicant: **R.P. SCHERER CORPORATION**
**2075 West Big Beaver Road**
**Troy Michigan 48099(US)**

(72) Inventor: **Vostrovsky, Ladislav J.**
**1201 Canal Road R. D. 1**
**Princeton, New Jersey 08540(US)**

(72) Inventor: **Pace, Joseph A.**
**3645 Villanova Court**
**Bethlehem, Pennsylvania 18017(US)**

(74) Representative: **Allen, Oliver John Richard et al,**
**Lloyd Wise, Tregear & Co. Norman House 105-109 Strand**
**London, WC2R 0AE(GB)**

(54) Gelatin capsule and method and apparatus for ultrasonically welding thereof.

(57) A two piece, hard shell gelatin capsule wherein an ultrasonic bond extends along a portion only of the circumferential overlapping sections, the bond being sufficient to resist separation of capsule portions from each other without causing damage to either capsule portion.

The method for ultrasonically welding the capsules together includes randomly storing filled capsules within a hopper and while moving the capsules from the hopper to an ultrasonic welding station, the capsules are oriented in such a way that the overlapping section of each capsule is presented to the ultrasonic welding station in the same relative position.

The apparatus for ultrasonically securing the body and cap portions of gelatin capsules together includes a frame, a hopper mounted on the frame for storing a plurality of capsules, in the filled condition, in a random manner. A mechanism is mounted on the frame for ultrasonically securing the body and cap portions of the capsules together and means are provided for conveying the capsules from the hopper to the ultrasonic securing means while orienting each of the capsules to position the overlapping section of the ultrasonic securing means at the same relative position for each of the capsules.

GELATIN CAPSULE AND METHOD AND APPARATUS FOR
ULTRASONICALLY WELDING THEREOF.

This invention relates to hard shell gelatin capsules, used for pharmaceuticals, vitamins and the like, and in particular to capsules comprising two telescoping halves which are secured together to resist separation without causing damage to the capsule for the purpose of providing tamper resistance capsules.

One of the most commonly used dosage forms for drugs, vitamins, food supplements and the like in use today for both human and veterinary use is a hard shell gelatin capsule of the type which generally comprises two halves which are telescopically interconnected together in various ways, such as by the use of friction. One type of locking hard shell gelatin capsule is shown, for example, in U. S. Patent No. 4,040,536. Such hard shell gelatin capsules are filled, generally with a medicament or vitamin, in various forms, usually in powdered form.

The techniques and apparatus that are employed to manufacture such filled, hard shell gelatin capsules generally, are quite well known and established. The manufacture of hard shell gelatin capsules is most generally performed by equipment known in the art as a "Colton 950" machine. In manufacturing the gelatin capsule shells, rigid pins are supported on a rigid support member, and are dipped into a liquid gelatin which coats each of the pins. The gelatin is dried to a desired moisture content while being conveyed through a drying chamber. The formed gelatin capsule half is stripped from each of the pins and cut to the desired size. The capsule halves, that is, the body half and the cap half, are joined together, prior to filling, and packaged. The empty joined capsules are then filled; such as with a powder, by the manufacturer. Prior to filling, the empty capsule half must be separated. The body portion is filled with the medicament, the vitamins, or the like and the cap portion of the shell is thereafter rejoined to the filled body portion. In the prior art, the capsules, once joined, are held together generally by friction or locking indentations along the overlapping portions of the cap and body portions of the shell so as to provide the desired securement. In the case of such filled capsules, the capsules are usually readily manually separable. Although, the ability to easily separate the capsules is not usually a problem, there have been recent, highly unfortunate incidents involving tampering with the capsules. Therefore, it has become highly desirable to provide an arrangement by which the hard shell gelatin capsule halves can be generally tamper proof or tamper resistant following filling and joining.

Although various techniques could, conceivably be utilized for joining the gelatin capsule halves or body and cap portions together, certain methods, such as the use of a foreign substance, such as an adhesive, are not considered feasible, both from the standpoint of production and from the standpoint of government regulations. The patents of Joseph A. Pace, one of the inventors herein, namely U.S. Patent Nos. 4,281,763, and 4,325,761, disclose a two piece hard shell gelatin capsule and method for manufacture thereof, wherein the gelatin capsule may be filled with a liquid and hermetically sealed for 360° to provide a liquid proof container. These patents disclose, in the specification and the drawings, a method by which an ultrasonic weld for 360° unifies the outwardly stepped portion of the cap member to the upper end of the body member. The prior Pace patents, therefore, disclose a 360° liquid proof seal which internally joins the cap member to the body member. It is now considered highly desirable to provide tamper resistant capsules which can be ultrasonically welded in an economical manner at high production rates.

A two piece, hard shell, gelatin capsule wherein the capsule includes a body portion with an open end, a cap portion for covering the body portion over its open end, the body portion and the cap portion defining a chamber and an overlapping circumferential section defined between the cap portion and the body portion, a fill material within the chamber in accordance with the invention has an ultrasonic bond (which may be a spot weld) defined along a portion only of the circumferential overlapping section, the ultrasonic bond being sufficient to resist separation of the capsule portions from each other without damaging at least one of the capsule portions.

The fill material may be a medicament, vitamin or like material, in powdered, non-liquid form.

A method for makng the capsules involves utrasonically sealing the body portion to the cap portion, and includes the steps of randomly storing the filled capsules, conveying the capsules along at least one row, with the overlapping sections of each of the capsules being moved to the same relative orientation as the adjacent capsules, and then ultrasonically securing the cap and body portions of the capsules together along the overlapping sections, the ultrasonic securement providing sufficient strength to resist separation of the cap and body portions from each other, without damaging at least one of the capsule portions.

This enables manufacture of capsules at high production rates, having an ultrasonic spot weld on each of a plurality of previously filled, interconected cap and body portions of the gelatin capsule shells.

A preferred apparatus, for carrying out the method for making the capsules includes a frame, a hopper mounted on the frame for storing a plurality of capsules randomly, an ultrasonic horn for securing the body and cap portions of the capsules together with a bonding strength that resists separation without damaging at least one of the capsule portions, and a mechanism for conveying the capsules from the hopper to the ultrasonic horn while orienting each of the capsules so that the overlapping sections are presented to the ultrasonic securing means at the same relative position for each capsule.

The invention will now be further described by way of example with reference to the accompanying drawings in which:-

FIGURE 1 is a pictorial view of an embodiment of apparatus for manufacturing tamper resistant gelatin capsules containing a fill material in accordance with the invention;

FIGURE 2 is a transverse, enlarged view of the apparatus of FIGURE 1, as viewed along the line 2-2, particularly illustrating the mechanism for transferring or conveying capsules from the hopper to the ultrasonic welding portion of the apparatus;

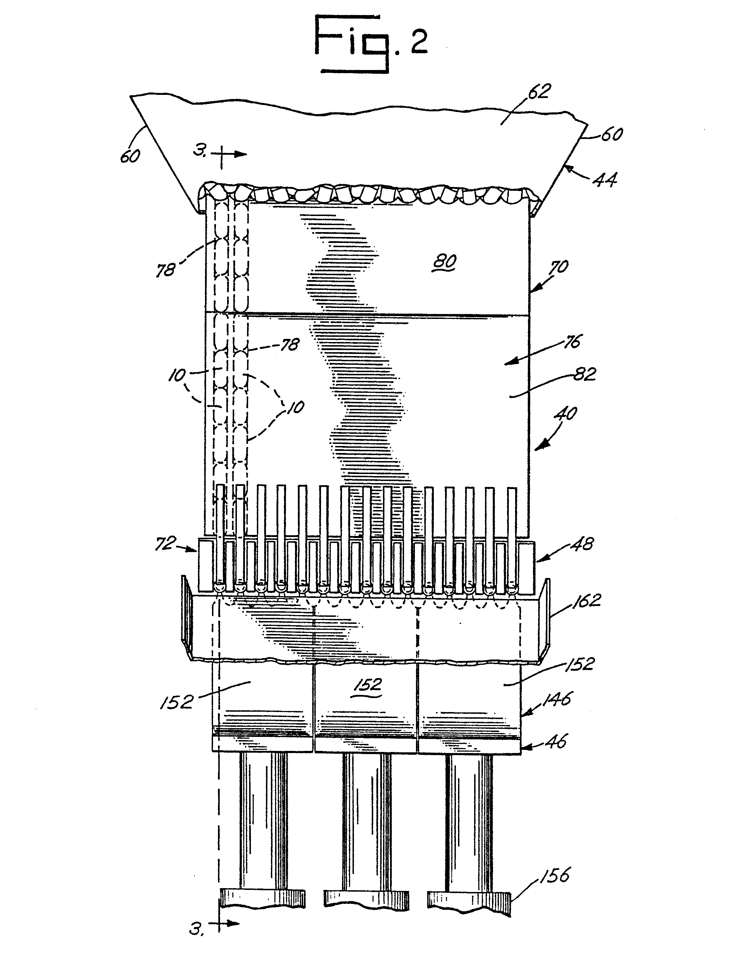

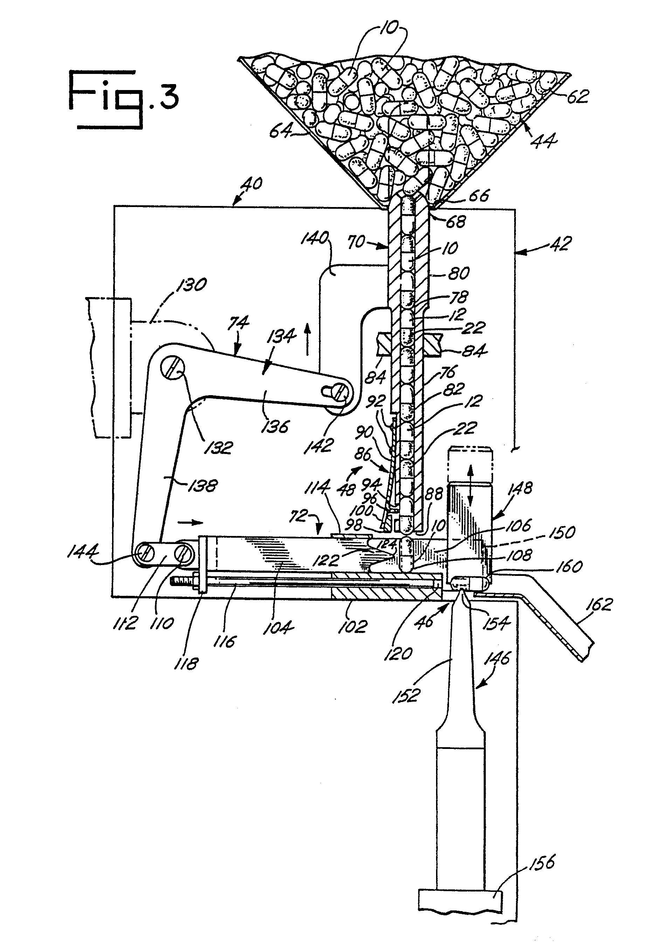

. FIGURE 3 is a transverse sectional view taken along the line 3-3 of FIGURE 2 illustrating the transfer mechanism and the ultrasonic weling mechanism utilized in our apparatus;

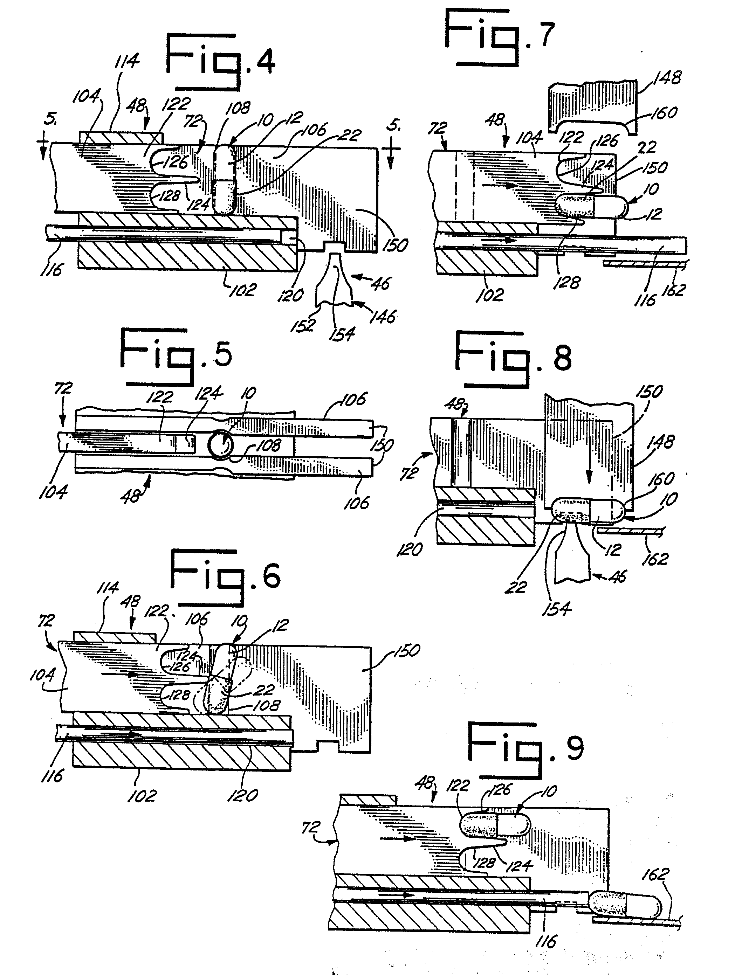

FIGURE 4 is an enlarged detailed view showing the mechanism used for orienting the capsule for ultrasonic welding;

FIGURE 5 is a view taken along the line 5-5 of FIGURE 4;

FIGURE 6 is a view similar to FIGURE 4 showing transverse movement of a pusher used for orienting the capsule with the body section moving first;

FIGURE 7 is a view, similar to FIGURE 6, where the pusher moves the capsule into position for the ultrasonic welding;

FIGURE 8 is a view similar to FIGURE 7 showing a holder securing the capsule in place during ultrasonic welding;

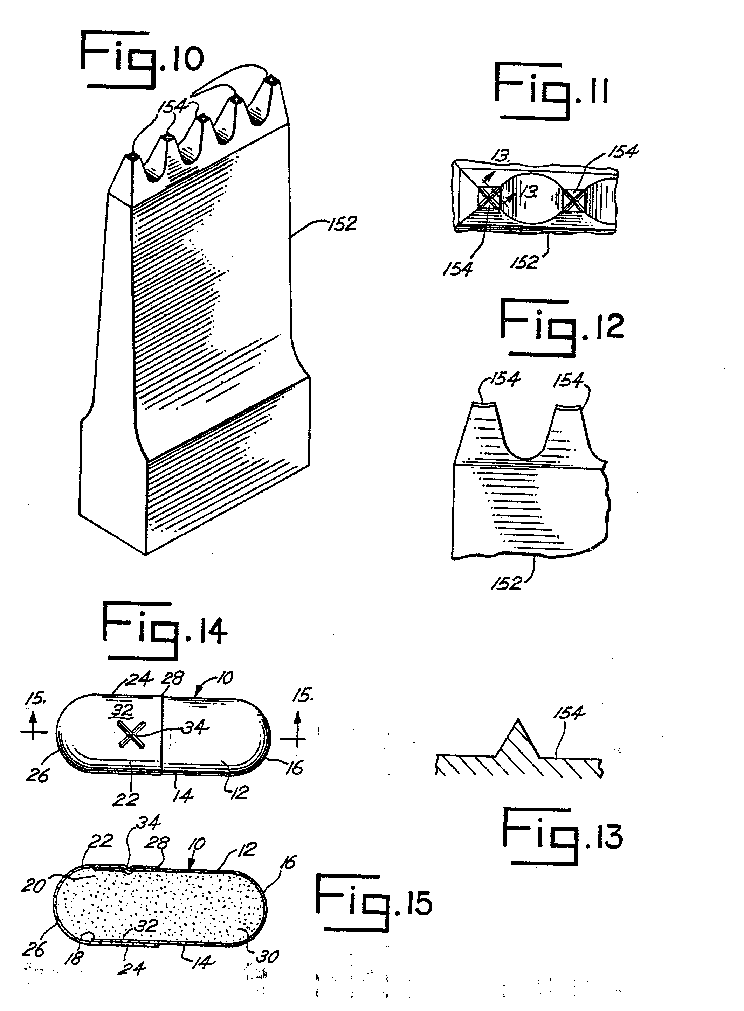

FIGURE 9 is a view similar to FIGURE 4 showing ejection of an ultrasonically welded capsule which simultaneously showing movement of the next capsule into position for ultrasonic welding;

FIGURE 10 is a pictorial view of a five station ultrasonic welding horn useful in our invention;

0135372

FIGURE 11 is an enlarged top plan sectional view of the weling horn of FIGURE 10;

FIGURE 12 is a side elevational view of the embodiment of FIGURE 11;

FIGURE 13 is an enlarged sectional view taken along the lines 13-13 of FIGURE 11;

FIGURE 14 is a top plan view of an ultrasonically welded capsule made in accordance with our invention; and

FIGURE 15 is a sectional view taken along the line 15-15 of the capsule embodied in FIGURE 14.

Referring to FIGURE 14 and 15, there is shown a two piece, hard shell, telescoping, gelatin capsule, generally 10, which is made in accordance with our invention. The capsule 10, in a conventional manner, is made from gelatin, which is, a well known material for making orally administered capsules and generally comprise a non-synthetic, substantially tasteless, odorless, dried protein which is readily soluble, and digestible when taken orally and swallowed by humans or animals. Gelatin is generally formed from animal tissue by boiling under pressure in the presence of water. The gelatin capsule is semi-rigid but pliable. The size, shape and thickness of the capsules 10 may vary over a wide range, except the capsule must be of such a size as to be readily swallowable either by animals or by humans.

The capsule 10 includes a U-shaped body member 12, in which a non-liquid, such as a powder, has been placed by known procedures. The body portion 12 includes a substantially cylindrical side wall 14 which is unitarily formed with a closed dome shaped bottom end 16. A rim 18 is formed at the outer edge of the cylindrical side wall 14 and defines an open end 20. The open end 20 is enclosed by a cap member 22 which defines the other half of the capsule 10. The cap member 22 includes a cylindrical side wall 24, and a unitary dome shaped closed end 26. A rim 28 is defined at the outer edge of the cap side wall 24. The inner diameter of the cylindrical side wall 24 of the cap 22 is substantially equivalent in diameter to the outside diameter of the cylindrical side wall 14 of the body portion 12. Conventional capsules 10 receive a fill 30, such as a powder, within the body portion 12. The cylindrical side wall 24 of the cap member 22 is slid over the side wall 14 of the body member 12 and is either frictionally retained in place or held in place by indentations (not shown) or the like such as that shown, for example, in the previously mentioned U.S. Patent No. 4,040,536, the disclosure thereof being incorporated herein by reference.

As shown in FIGURE 15, an overlapping section 32 is defined between the cylindrical side wall 14 of the capsule body 12 and the cylindrical side wall 24 of the cap 22. An ultrasonic weld or seal 34 is applied to the outer periphery of the sidewall 24 of the cap member 22 substantially intermediate of the rim 28 of the side wall 24 of the cap 22 and the rim 18 defined at the open end 20 of the side wall 14 of the body member 12. The ultrasonic weld 34 for the gelatin capsule is accomplished by applying high frequency vibrations to the cap 22 and the body 12. By ultrasonic welding procedures, the vibrations, through surface and intramolecular friction, produce a sharp rise in temperature at the location where the side walls 14 and 24 of the body 12 and cap 22 meet. When the temperature is high enough to melt the gelatin, there is an actual flow of gelatin between the parts. When the vibrations stop, the material solidifies under pressure and a uniform weld results. The procedure is called "ultrasonic" since most such equipment operate above the usual range of human hearing (18,000 hertz).

The ultrasonic weld 34 not only involved a flow of material, that is, flow of the gelatin between the body 12 and cap 22, but because of the pressure that is normally applied during the ultrasonic welding, there is somewhat of a distortion between the adjacent capsule parts 12 and 22, as best seen in FIGURE 15. It has been found that a single ultrasonic weld 34 is generally sufficient to resist separation of the body 12 from the cap 22 without causing damage to either the cap 22 or the body 12, thus making it visually apparent that there has been tampering with the capsule 10. Additional welds, however, may be used. The particular shape or appearance of the weld 34 may vary widely although an "X" is shown for the ultrasonic weld 34 as seen in FIGURE 14. However, any desired code or shape may be utilized. Because the weld 34 is significantly less than 360°, that is, less than the circumference of the side walls 14 and 24, the capsule 10 is not considered useful for storing a liquid in the manner described in Patent No. 4,281,763 wherein a full 360° liquid impervious seal is provided between the interior parts of the capsule. The capsule 10 is tamper resistant because the bonding strength provided by the ultrasonic weld 34, resulting from flow of the gelatin between the two capsule parts and from distortion of the capsule parts at the weld 34, substantially avoids separation thereby resisting manual tampering with the capsule. If the capsule 10 is forcefully separated, it would be visually apparent that the capsule has been tampered with.

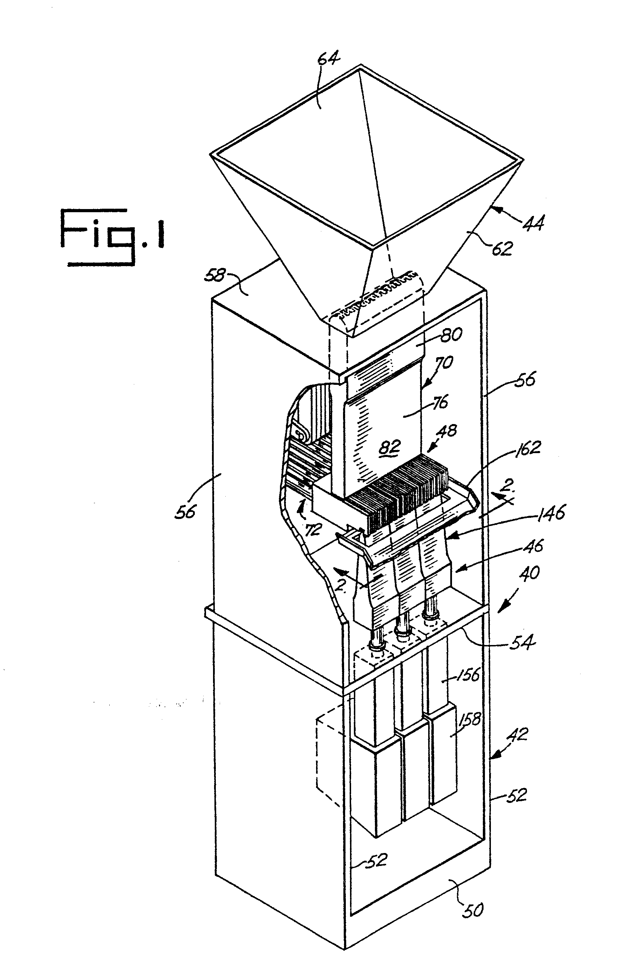

Referring to FIGURES 1-13, there is shown an apparatus, generally 40, which is highly useful in manufacturing the capsules 10 at a high rate of production. As will be described, the apparatus 40 is capable of producing ultrasonically welded capsules 10 at high rates of production sufficient to meet the needs of manufacturers utilizing gelatin capsules 10. The specific rate of production depends upon the particular size of the machine 10 although, as will be described, the rate of production, per row, is about one capsule per second.

Referring to the drawings, our unique apparatus 40 for manufacturing the capsules 10 at a high rate of production generally comprises a substantially upright frame, generally 42, a hopper, generally 44, mounted at the upper end of the frame 42, and ultrasonic welding assembly, generally 46 mounted below the hopper 44 and on the frame 42, and a conveying and capsule orienting assembly, generally 48, mounted on the frame 42 intermediate the hopper 44, and the ultrasonic welding assembly 46 of the frame 42.

The frame assembly 42 generally includes a rigid base 50, a pair of upright, rigid, spaced side walls 52 which are securely interconnected to and project upwardly from the base 50. A transverse support plate 54 is interconnected to the upper ends of the spaced side walls 52 and is spaced above the base 50. An upper pair of side walls 56 are rigidly connected to the intermediate plate 54 and project upwardly therefrom, in substantial alignment with the side walls 52, and terminate at an upper plate 58. The upper plate 58 is rigidly interconnected to the upper ends of the upper side walls 56. The plate 58 is substantially parallel to both the base plate 50 and the intermediate plate 54. The base 50, the side walls 52, the intermediate plate 54, the upper side walls 56 and the upper plates 58 define a rigid support frame for supporting each of the hopper 44, the ultrasonic welding assembly 46, and the conveyor and orienting assembly 48.

The hopper 44 is best seen in FIGURES 1 and 3. The hopper 44 includes a pair of upwardly and outwardly sloped side walls 60 which are rigidly secured to the upper plate 58 of the frame 42. Similarly, a pair of upwardly and outwardly sloped front and rear walls 62 and 64 are rigidly interconnected to the opposite ends of the hopper side wall 60 with their lower edges being secured to the upper plate 58. The lower edges of the side walls 60 and front and rear sloped walls 62 and 64 terminate at a lower end and define a substantially rectangular opening 66 in the hopper 44 which is contiguous with a rectangular opening 68 provided in the upper plate 58. The hopper 44, which is rigidly mounted on the plate 58 of the frame 48, randomly supports a plurality of capsules 10, as best seen in FIGURE 3. The capsules 10, as previously discussed, are filled with a fill material, such as a pharmaceutical or vitamin.

Referring to FIGURES 1-3, in particular, the conveying and orienting assembly 48 includes a vertically reciprocal plunger, generally 70, the plunger 70 intercommunicating with the hopper 44, a horizontally slideable capsule orienting mechanism, generally 72, which communicates with the lower end of the plunger 70, and a drive mechanism, generally 74, for reciprocally operating both the plunger assembly 70 and the orienting mechanism 72.

The plunger assembly 70 comprises vertically and reciprocally mounted transversally elongated channel plate, generally 76. As best seen in FIGURES 2 and 3, the channel plate 76, includes a plurality of upright channels 78 which pass completely through the channel plate 76. Although the number of channels 78 may vary, seen in FIGURE 2, the channel plate 76, as shown, includes 15 upright channels 78. The channels 78 have a diameter which is constructed to slidably but freely permit passage therethrough of a plurality of adjacent, filled capsules 10 in end to end relationship. The diameter of each channel 78 is slightly in excess of the diameter of the cap portion 22 which is of slightly greater diameter than the body portion 12. As seen in FIGURE 3, the channel plate 76 is in its lowermost position. The upper end 80 of the channel plate 76 has an enlarged thickness relative to the lower portion 82 thereof. The upper end of the channel plate 80 is dome shaped in cross section and the upper ends of the channels 78 are flared outwardly. By this structural arrangement and by reciprocal movement of the plunger assembly 70 upwardly into the hopper 44, randomly stored capsules 10 enter the channels 78 in a vertical position and pass downwardly therethrough, as seen in FIGURE 3. With reference to FIGURE 3, it is to be noted that the capsules 10 pass through the channels 78 in both the capside up and the capside down position. Bearing blocks 84 are provided to slidably guide the vertically reciprocal movement of the plunger assembly 70 in response to movement imparted thereto by the drive mechanism 74, in a manner to be hereinafter described in greater detail.

Referring to FIGURE 3, a capsule stop assembly 86 is mounted on the lower end of the lower portion 82 and adjacent to a bottom opening 88 in each channel 78. The capsule stop assembly 86 comprises a leaf spring member 90 which is fixedly secured to the lower portion 82 by rivets 92 and the like. The spring 90 is normally biased laterally inwardly towards the channels 78 and the capsules 10 which are passing therethrough. A transverse opening 94 is provided in the wall of the lower end of the lower portion 82 of the channel plate 76 and communicates with each of the channels 78. A transversally directed stop arm 96 is bent inwardly from and is unitary with the spring 90. The arm 96 extends into the transverse opening 94 in order to either selectively hold the capsule 10 or permit the movement thereof downwardly towards the orienting mechanism 72. A fixed cam 98 is positioned relative to the lower portion of the channel plate 76 so that, upon downward movement, the lower end 100 of the spring 90 engages the cam 98 in order to move the spring 90 and thereby the stop arm 96 laterally outwardly from the channel 78 so as to permit the downward movement of capsules towards the orienting mechanism 72.

The orienting mechanism 72 is positioned adjacent and below the plunger assembly 70 and includes a base 102 which is fixed to the frame 42, a laterally movable, pusher plate 104, and a pair of spaced fixed, substantially upright squeeze plates 106 which are mounted on the base 102. It is to be understood that, although the description of the orienting mechanism 72 refers only to the orientation of a single row of capsules 10 being passed downwardly from a single channel 78, the channel plate 76, has a plurality of channels 78 and simultaneous orientation is occurring for each row of capsules.

The upright squeeze plates 106 are fixed to the base 102 and are spaced laterally from each other a distance apart that is slightly less than the outside diameter of the cap 22 of the capsule 10. Therefore, the squeeze plates 106 squeeze the cap end of the capsule 10 more than the body end. The capsules 10 are received in a receiving· section 108, of slightly enlarged diameter relative to the squeeze plates 106 and are positioned directly below each channel 78 immediately below the bottom end of the channel plate 76. The capsules 10 are dropped therein since the stop arm 96 permits movement of a single capsule 10 downwardly into the capsule receiving section 108 as the cam 98 moves the spring 90 and arm 96 laterally outwardly.

Each pusher plate 104 is transversally movable relative to the channels 78 and relative to the vertically positioned, elongated capsules 10. Each pusher plate 104, as seen best in FIGURES 3-9, is positioned intermediate the squeeze plates 106 and is in direct alignment with the capsule receiving section 108 so as to be in direct alignment with a single capsule 10 which is vertically positioned therein. As seen in FIGURE 3, the outer end of the pusher plate 104 is operatively interconnected to the drive mechanism 74. The outer end of the pusher plate 104 includes a transversally mounted pin 110 which is interconnected to a link 112 which is operatively interconnected to the drive mechanism 74. The base 102 has an upper guide 114 positioned thereabove. The upper guide 114 and base 102 guidably support the pusher plate 104 for transverse movement in response to movement imparted by the drive mechanism 74. A transverse guide and ejector rod 116 is secured to an upright arm 118 located at the outer end of the pusher plate 104. The guide/ejector rod 116 is guidably supported for transverse movement, within a transverse opening 120, along with the pusher plate 104. Therefore, the pusher plate 104 is guidably supported in its capsule orienting movement by both the guide/ejector rod 116 moving within the opening 120 and also by being guidably supported by the base 102 and the upper guide 114. The pusher plate 104 includes a capsule orienting end 122. The orienting end 122 includes an outwardly projecting intermediate projection 124 which is aligned with the center line of the upright capsule 10 located in the capsule receiving section 108 and is constructed and arranged to engage the capsule 10 at a point intermediate its upper and lower ends. The orienting end 122 includes an upper capsule receiving pocket 126 above the projection 124 and a lower capsule receiving packet 128 below the projection 124. As the projection 124 is moved forwardly by movement of the pusher plate 104, the cap end of each capsule 10, being of greater diameter than the body end, is squeezed by the squeeze plates with more pressure to the cap end, thereby causing the capsule 10 to pivot about its central point in such a way that the capsule 10 has its cap end pivot so the cap end enters into the transverse lower capsule pocket 128, when the capsule 10 is in the cap end down position, or into the upper capsule pocket 126 when the capsule 10 is in the cap end up position.

The drive mechanism 74 includes a prime mover schematically shown as 130. The prime mover 130 reciprocally rotates a drive shaft 132 which is keyed to an L-shaped drive arm 134. The drive arm 134 includes a transverse section 136 and an upright section 138. A fixed arm 140 is rigidly secured to the upper portion of the channel plate 76. The outer end of the transverse section 136 of the drive arm 134 is operatively interconnected to the lower end of the fixed arm 140 by a pivot 142. Similarly, the lower end of the upright section 138 of the drive arm 134 is interconnected to the link 112 by a pivot shaft 144. The drive shaft 132 is rocked by the prime mover 130 and, as best seen in FIGURE 3, causes the arm 134 to be rocked upwardly for reciprocating the plunger 70 upwardly into the hopper 44 while the lower section 138 moves the pusher plate 104 laterally forwardly, in the direction shown by the arrow in FIGURE 3 for causing the pusher plate 104 to orient the capsule 10.·

The ultrasonic welding assembly 46 generally includes an ultrasonic power section 146, as seen in FIGURES 1-3 and 10, a capsule holder assembly, generally 148, and a squeeze plate extension section 150.

The ultrasonic power section 146 is generally of conventional construction and includes a stationary ultrasonic horn 152, as best seen in FIGURE 10 with five separate welding stations 154 which are spaced apart on the horm 152. The power section 146 of each unit includes an ultrasonic booster, shown as 156, positioned below the horn 152 and operatively associated therewith, and a converter section 158 also associated therewith and positioned below the booster 156. The operating principles of the ultrasonic assembly 146 are well known. In ultrasonic welding, a power supply provides high frequency electrical energy to the converter 158 which changes the energy to mechanical or vibratory energy. The converter 158 is coupled to the booster 156 which determines the amplitude of vibrations to be produced at the face of the horn. The horn 152 transfers the ultrasonic vibrations from the converter 158 to the capsule parts that are to be welded. The ultrasonic horn 152 remains stationary as the capsule holder 148 is moved downwardly a sufficient distance so that the desired pressure is applied to the capsule 10 during welding. Generally, the ultrasonic energy applied to accomplish the desired welding of the capsules varies widely in operating conditions.

The capsule holder or clamp 148 is reciprocally mounted for movement into the space between the squeeze plate of the squeeze plate extension 150 and is passed downwardly therebetween. The capsule holder 148 includes a capsule pocket 160 for receiving a single capsule 10 for holding each capsule 10 in position against the welding station 154, as best seen in FIGURES 3 and 10. The clamp 148 remains in the down position for a sufficient time to accommodate the welding operation. The ultrasonic welding time varies such as between about .1 and .4 seconds, depending on the clamping pressure, the amount of fill in the capsules 10, the moisture content of the capsules, the depth of weld, and various other conditions. In other words, the apparatus 40 must be adjusted prior to production, depending upon the capsules being welded, the nature of the weld, and the like. The amount of electrical power to the converter 158 may vary although it has been found that about 350 watts provides adequate results. The ultrasonic frequency may also vary and good results may be readily obtained with a frequency of 20 Khz to 40 Khz.

In describing the apparatus 40 for a better understanding of the invention, our method will also become apparent. First, the operator places a plurality of capsules 10 within the hopper 44, the plunger assembly 70 is moved upwardly in the plunger in such a way that the capsules 10 are guided into the channels 78 by the reciprocal movement imparted to the plunger assembly 70 by the drive mechanism 74. The capsules 10 pass in a substantially upright position downwardly in each of the channels 78 towards the lower end of the channel 78 into the capsule receiving section 108 of the squeeze plates 106. The plunger assembly 70 is then moved to the downward position. In movement to the downward position, the stop arm 96 is moved laterally out and away from the lower end of the channel 78 so as to permit the downward passage of the capsule 10 to the capsule receiving section 108. The pressure plate 104 moves forwardly for movement of the projection 124 against the center line of the capsule 10. As seen in FIGURES 4-7, the capsule is engaged by the projection 124, the capsule 10 pivots about its central point, with the body portion thereof moving to the forwardly directed position and the cap portion moving to the rearward position. In FIGURES 4-7, since the cap end is in the down position, and since the cap end is in somewhat greater diameter than the body end, as described above, the cap end pivots about the projection 24 and is received into the lower capsule pocket 128 in the body portion forward position. Referring to FIGURE 9, in the event that the cap end is in the up position, the reverse occurs, that is, the cap end moves into the upper capsule pocket 126. This general type of orientation mechanism has been used in orienting empty capsules for filling.

The pusher moves the capsules 10 forwardly to the squeeze plate extension zone 150 which is positioned below the capsule holder or clamp 148. As seen in FIGURE 7, the capsule 10 is positioned in a horizontal position immediately below the clamp 148 and specifically below the capsule pocket 160 provided in the the lower end thereof. As seen in FIGURE 8, the capsule holder is moved downwardly by a drive mechanism (not shown) so as to engage the capsule 10 and move against the welding station 154. It is important to note that the capsule 10 is always brought into this welding zone at the same relative position, that is, in such a way that the welding station 154 of the ultrasonic welding horn 152 contacts only a limited area of the capsule 10 along the side wall 24 of the cap member 22 at the overlapping section 32 defined by the body 12 and the cap 22. As stated before, the ultrasonic energy is applied over a preselected length of time at a preselected frequency and a desired ultrasonic weld, as previously described, is accomplished.  Referring to FIGURE 9, as the pusher plate 104 is moved forwardly so is that ejector rod 116.  The outer end of the ejector rod 116 is in direct lateral alignment with the horizontally positioned capsule 10 and engages the cap end to move the capsule 10 outwardly away from the squeeze plate extension area 150 onto an outlet trough 162.  The ejected capsules 10 are then passed on for packaging.

CLAIMS:

1.      A two piece, hard shell gelatin capsule, comprising, in combination, a body portion having an open end, a cap portion for covering said open end of body portion, said body portion and said cap portion defining a chamber and a circumferential overlapping section between said cap portion and said body portion, a fill material contained within said chamber, characterised in that an ultrasonic bond (34) extends along a portion only of the circumferential overlapping sections (32) the utrasonic bond (34) being sufficient to resist separation of the capsule portions (12, 22) from each other without damaging at least one of the capsule portions.

2.      A capsule as claimed in Claim 1 wherein the bond extends for less than 360o and is formed on the exterior of the capsule portions.

3.      A capsule as claimed in Claim 1 or 2 wherein the bond is formed both by distortions of the cap and body portions and by flow of gelatin therebetween.

4.      A method for ultrasonically securing overlapping sections of body and cap portions of gelatin capsules together, the capsules containing a fill material, characterised in that the filled capsules are randomly stored and then moved while being oriented in at least one row with an overlapping section of each capsule being in the same relative orientation as adjacent capsules, and subsequently ultrasonically securing the cap and body portions of the capsules together along a portion only of each of the overlapping sections with sufficient bonding strength to resist separation of the cap and body portions from each other without damaging at least one of the capsule portions.

5.    A method as claimed in Claim 4 including a step of applying clamping pressure to the capsule while ultrasonically securing the cap and body portions together.

6.    An apparatus for ultrasonically securing together, an overlapping section between a cap and body portion of a gelatin capsule having a fill contained within the capsule, characterised in that the apparatus comprises, in combination, a frame (42), a hopper (44) mounted on the frame for storing a plurality of the capsules in a random manner, means (46) on the frame for ultrasonically securing the body and cap portion of the capsules together along a portion only of the overlapping section with a bonding strength sufficient to resist separation of the cap and body portions from each other without damaging at least one the the said capsule portions, and means (48) for conveying such capsules from the hopper (44) to the ultrasonic securing means (46) while orienting each of the capsules for positioning of the overlapping section at the ultrasonic securing means at the same relative position for each of the capsules.

7.      Apparatus as claimed in Claim 6 including means (148) for holding each of the capsules in place with pressure against the ultrasonic securing means.

8.      Apparatus as claimed in Claim 6 or 7 including means (116) for ejecting each secured capsule away from the ultrasonic securing means.

Fig.1

Fig. 2

Fig.3

Fig.4

Fig.5

Fig.6

Fig.7

Fig.8

Fig.9

Fig.10

154

152

Fig.11

13.

154

13

154          152

Fig.12

154          154

152

Fig.14

24  28        10

32

34

26          22    14    12    16

15.          15.

Fig.13

154

Fig.15

34

22          28    10    12

20          16

26    18    32    30

24    14